# EUROPEAN PATENT SPECIFICATION

(11) **EP 3 739 231 B1**
(45) Date of publication and mention of the grant of the patent: **06.12.2023**
(21) Application number: 19738506.5
(22) Date of filing: 09.01.2019
(51) Int. Cl.: F16D 13/52, F16D 43/21, F16D 7/02, F16D 13/02, F16D 23/12

(54) **POWER TRANSMISSION DEVICE**
LEISTUNGSÜBERTRAGUNGSVORRICHTUNG
DISPOSITIF DE TRANSMISSION DE PUISSANCE

(30) Priority: 11.01.2018 JP 2018002703
(43) Date of publication of application: 18.11.2020
(73) Proprietor: Kabushiki Kaisha F.C.C., Hamamatsu-shi, Shizuoka 431-1394 (JP)
(72) Inventor: NISHIKAWA, Junichi, Hamamatsu-shi, Shizuoka 431-1304 (JP); YOSHIMOTO, Katsu, Hamamatsu-shi, Shizuoka 431-1304 (JP); CHEN, Han Hiong, Hamamatsu-shi, Shizuoka 431-1304 (JP); OZAWA, Yoshihiko, Hamamatsu-shi, Shizuoka 431-1304 (JP)
(74) Representative: Cohausz & Florack
(86) International application number: PCT/JP2019/000382
(87) International publication number: WO 2019/139045

(56) References cited:
- EP-A1- 2 530 348
- WO-A1-2007/007538
- WO-A1-2016/024557
- JP-A- H0 893 786
- JP-A- H0 893 786
- JP-A- H08 128 462
- JP-A- 2007 024 134
- JP-A- 2013 194 795

## Description

### Technical Field

The present invention relates to a power transmission device that is capable of appropriately transmitting or cutting off rotational power of an input member to an output member.

### Background Art

In general, a motorcycle has a power transmission device for appropriately transmitting or cutting off driving power of an engine to a transmission and a driving wheel. The power transmission device includes an input member coupled to the engine side, an output member coupled to the transmission and driving wheel side, a clutch member coupled to an output member, and a pressure member that is capable of pressing clutch plates (drive-side clutch plates and driven-side clutch plates) against each other or releasing a press-contact force. The power transmission device is configured to transmit power by pressing the drive-side clutch plates and the driven-side clutch plates against each other and to cut off power by releasing the press-contact force.

For example, in a power transmission device disclosed in WO 2016/024557 A1, a receiving member is attached to the pressure member, and a clutch spring (urging means) contained in the receiving member urges the pressure member in a direction such that the drive-side clutch plates and the driven-side clutch plates are pressed against each other. One cam surface is formed in the receiving member, and the other cam surface, which faces the one cam surface, is formed in the clutch member. These cam surfaces constitute a back-torque limiting cam that reduces the press-contact force between the drive-side clutch plates and the driven-side clutch plates if the pressure member and the clutch member rotate relative to each other when the rotation speed of the output member exceeds the rotation speed of the input member.

That is, if the pressure member and the clutch member rotate relative to each other when the rotation speed of the output member exceeds the rotation speed of the input member, the one cam surface and the other cam surface slide over each other and the back-torque limiting cam functions to move the receiving member in the axial direction relative to the pressure member. Thus, the urging force of the clutch spring applied to the pressure member decreases, so that the press-contact force between the drive-side clutch plates and the driven-side clutch plates is reduced.

A power transmission device with all features of the preamble of claim 1 is known from WO 2007/007538 A1.

### Summary of Invention

### Technical Problem

However, in the existing power transmission device described above, when a driver operates a clutch lever or the like to separate the pressure member from the clutch member to disengage the clutch (release the press-contact force between the clutch plate), the pressure member may rotate relative to the clutch member, and one cam surface and the other cam surface of the torque limiter cam may make contact with each other and the receiving member may become stuck.

If the driver tries to reengage the clutch (press the clutch plates against each other again) in such a state, it may be difficult for the receiving member to return to the original position due to the edge effect between the one cam surface and the other cam surface. Thus, a problem arises in that response when engaging the clutch becomes slow and the driver experiences an unpleasant sensation in operability due to feeling of idle running. Such a problem arises not only in a device that includes the receiving member separately from the pressure member but also in a device in which one cam surface is integrally formed in the pressure member.

The present invention has been made against the background described above and provides a power transmission device that controls rotation of a pressure member when a driver disengages a clutch and thus can improve responsiveness when the driver subsequently engages the clutch and improve operability. The objective problem is to limit the effect of the back-torque.

### Solution to Problem

According to the invention described in Claim 1, a power transmission device includes: a clutch housing that rotates together with rotation of an input member and to which a plurality of drive-side clutch plates are attached; a clutch member to which a plurality of driven-side clutch plates that are formed alternately with the drive-side clutch plates of the clutch housing are attached and to which an output member is coupled; a pressure member that is attached to the clutch member and that is capable of pressing the drive-side clutch plates and the driven-side clutch plates against each other or releasing a press-contact force in accordance with movement thereof relative to the clutch member in an axial direction; urging means that urges the pressure member in a direction such that the drive-side clutch plates and the driven-side clutch plates are pressed against each other; activation means that is activated by an operation performed by a driver and that is capable of releasing a press-contact force between the drive-side clutch plates and the driven-side clutch plates by moving the pressure member against an urging force of the urging means; and a back-torque limiting cam that is constituted by a pair of cam surfaces that reduce the press-contact force between the drive-side clutch plates and the driven-side clutch plates if the pressure member and the clutch member rotate relative to each other when a rotation speed of the output member exceeds a rotation speed of the input member, whereinthe power transmission device is capable of transmitting or cutting off rotational power that is input to the input member to the output member by pressing the drive-side clutch plates and the driven-side clutch plates against each other or releasing the press-contact force. The power transmission device includes a rotation restricting portion that is capable of restricting rotation, relative to the clutch member, of the pressure member that has moved due to activation of the activation means and is capable of maintaining a clearance between the pair of cam surfaces that constitute the back-torque limiting cam. Such a rotation restriction portion is per se known from JP H08 128462 A or JP H08 93786 A1. The power transmission device comprises also a fixing member that is fixed to the clutch member and to which the urging means is attached, wherein the rotation restricting portion is formed in a predetermined part of the fixing member.

With the present invention according to claim 1, the effect of back-torque is limited.

According to an invention described in Claim 2, the power transmission device described in Claim 1 includes a receiving member that is constituted by a separate member attached to the pressure member, that receives an urging force of the urging means on the pressure member side, and that is capable of transmitting the urging force to the pressure member; and one of the cam surfaces of the back-torque limiting cam is formed in the receiving member, and the other cam surface of the back-torque limiting cam is formed in the clutch member. EP 2 530 348 A1 discloses a pressure member with recessed portions, similar to such a receiving member described before.

According to an invention described in Claim 3, in the power transmission device described in Claim 1 or 2, the rotation restricting portion is formed in a predetermined part of the pressure member, and the rotation restricting portion formed in the pressure member that has moved due to activation of the activation means interferes with the clutch member and restricts rotation of the pressure member.

According to an invention described in Claim 4, in the power transmission device described in Claim 1 or 2, the rotation restricting portion is formed in a predetermined part of the clutch member, and the pressure member that has moved due to activation of the activation means interferes with the rotation restricting portion formed in the clutch member and restricts rotation of the pressure member.

### Advantageous Effects of Invention

With the invention described in Claim 1, because the power transmission device includes the rotation restricting portion that is capable of restricting rotation, relative to the clutch member, of the pressure member that has moved due to activation of activation means and is capable of maintaining the clearance between the pair of cam surfaces that constitute the back-torque limiting cam, by restricting rotation of the pressure member when a driver disengages the clutch, it is possible to improve responsiveness when the driver subsequently engages the clutch and to improve operability.

According to the invention the power transmission device includes the fixing member that is fixed to the clutch member and to which the urging means is attached and the rotation restricting portion is formed in a predetermined part of the fixing member, by performing replacement to the fixing member having the rotation restricting portion in an existing power transmission device, it is possible to restrict rotation of the pressure member when a driver disengages the clutch, and it is possible to improve responsiveness when the driver subsequently engages the clutch and to improve operability.

With the invention described in Claim 2, because the power transmission device includes the receiving member that is constituted by a separate member attached to the pressure member, that receives an urging force of the urging means on the pressure member side, and that is capable of transmitting the urging force to the pressure member, and because the back-torque limiting cam has one cam surface formed in the receiving member and the other cam surface formed in the clutch member, by restricting rotation of the pressure member when a driver disengages the clutch, it is possible to prevent the receiving member from becoming stuck onto the cam surface, which constitutes the back-torque limiting cam, and it is possible to improve responsiveness when the driver subsequently engages the clutch and to improve operability.

With the invention described in Claim 3, because the rotation restricting portion is formed in a predetermined part of the pressure member, and the rotation restricting portion formed in the pressure member that has moved due to activation of activation means interferes with the clutch member and restricts rotation of the pressure member, by partially changing the shape of the pressure member, it is possible to restrict rotation of the pressure member when a driver disengages the clutch, and it is possible to improve responsiveness when the driver subsequently engages the clutch and to improve operability.

With the invention described in Claim 4, because the rotation restricting portion is formed in a predetermined part of the clutch member, and the pressure member that has moved due to activation of activation means interferes with the rotation restricting portion formed in the clutch member and restricts rotation of the pressure member, by partially changing the shape of the clutch member, it is possible to restrict rotation of the pressure member when a driver disengages the clutch, and it is possible to improve responsiveness when the driver subsequently engages the clutch and to improve operability.

### Brief Description of Drawings

[Fig. 1] Fig. 1 is an overall longitudinal sectional view of a power transmission device according to a first embodiment of the present invention.
[Fig. 2] Fig. 2 is a perspective view of the power transmission device in a state in which a clutch housing and the like are removed.
[Fig. 3] Fig. 3 is a plan view of the power transmission device in a state in which the clutch housing and the like are removed.
[Fig. 4] Fig. 4 is a cutaway view taken along line IV-IV in Fig. 3.
[Fig. 5] Fig. 5 is a perspective view of a clutch member of the power transmission device.
[Fig. 6] Fig. 6 is a plan view of the clutch member.
[Fig. 7] Fig. 7 is a rear view of the clutch member.
[Fig. 8] Fig. 8 is a perspective view of a pressure member of the power transmission device as seen from one side.
[Fig. 9] Fig. 9 is a perspective view of the pressure member as seen from the other side.
[Fig. 10] Fig. 10 is a back view of the pressure member.
[Fig. 11] Fig. 11 is a plan view of the pressure member.
[Fig. 12] Fig. 12 is a perspective view of a receiving member of the power transmission device as seen from one side.
[Fig. 13] Fig. 13 is a perspective view of the receiving member as seen from the other side.
[Fig. 14] Fig. 14 shows a plan view and a rear view of the receiving member.
[Fig. 15] Fig. 15 is a sectional view taken along line XV-XV in Fig. 14.
[Fig. 16] Fig. 16 is a perspective view of a fixing member of the power transmission device as seen from one side.
[Fig. 17] Fig. 17 is a perspective view of the fixing member as seen from the other side.
[Fig. 18] Fig. 18 is a developed view illustrating cam surfaces of the power transmission device (when the vehicle is accelerating and the clutch is engaged).
[Fig. 19] Fig. 19 is a developed view illustrating the cam surfaces of the power transmission device (when the vehicle is decelerating and the clutch is engaged).
[Fig. 20] Fig. 20 is a developed view illustrating the cam surfaces of the power transmission device (when the vehicle is decelerating and the clutch is disengaged).
[Fig. 21] Fig. 21 is a plan view of a power transmission device according to a second embodiment of the present invention in a state in which a clutch housing and the like are removed.
[Fig. 22] Fig. 22 is a cutaway view taken along line XXII-XXII in Fig. 21.
[Fig. 23] Fig. 23 is a developed view illustrating cam surfaces of the power transmission device (when the vehicle is accelerating and the clutch is engaged).
[Fig. 24] Fig. 24 is a developed view illustrating the cam surfaces of the power transmission device (when the vehicle is decelerating and the clutch is engaged).
[Fig. 25] Fig. 25 is a developed view illustrating the cam surfaces of the power transmission device (when the vehicle is decelerating and the clutch is disengaged).
[Fig. 26] Fig. 26 is plan view of a power transmission device according to a third embodiment of the present invention in a state in which a clutch housing and the like are removed.
[Fig. 27] Fig. 27 is a cutaway view taken along line XXVII-XXVII in Fig. 26.
[Fig. 28] Fig. 28 is a developed view illustrating cam surfaces of the power transmission device (when the vehicle is accelerating and the clutch is engaged).
[Fig. 29] Fig. 29 is a developed view illustrating the cam surfaces of the power transmission device (when the vehicle is decelerating and the clutch is engaged).
[Fig. 30] Fig. 30 is a developed view illustrating the cam surfaces of the power transmission device (when the vehicle is decelerating and the clutch is disengaged).

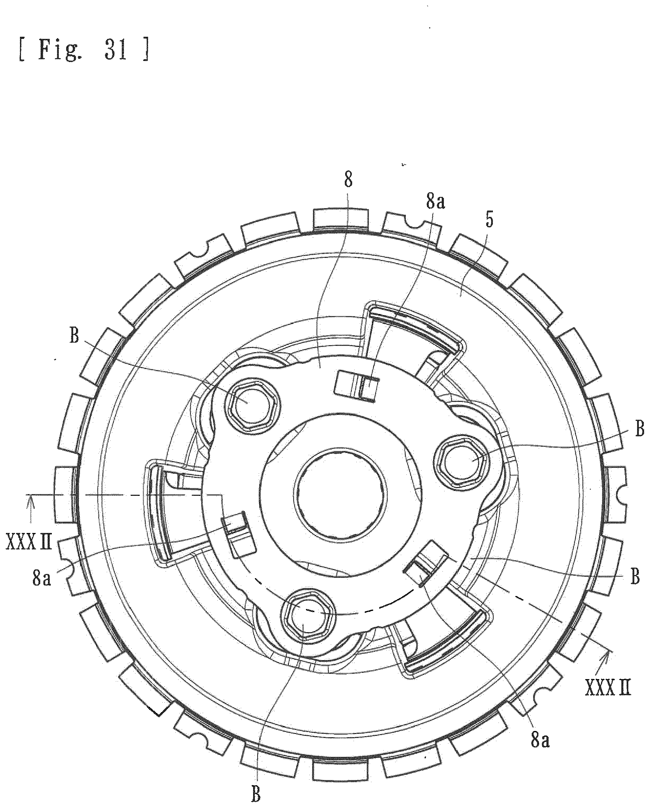

[Fig. 31] Fig. 31 is a plan view of a power transmission device according to a fourth embodiment of the present invention in a state in which a clutch housing and the like are removed.
[Fig. 32] Fig. 32 is a cutaway view taken along line XXXII-XXXII in Fig. 31.
[Fig. 33] Fig. 33 is a developed view illustrating cam surfaces of the power transmission device (when the vehicle is accelerating and the clutch is engaged).
[Fig. 34] Fig. 34 is a developed view illustrating the cam surfaces of the power transmission device (when the vehicle is decelerating and the clutch is engaged).
[Fig. 35] Fig. 35 is a developed view illustrating the cam surfaces of the power transmission device (when the vehicle is decelerating and the clutch is disengaged). Description of Embodiments

Hereafter, embodiments of the present invention will be described in detail with reference to the drawings.

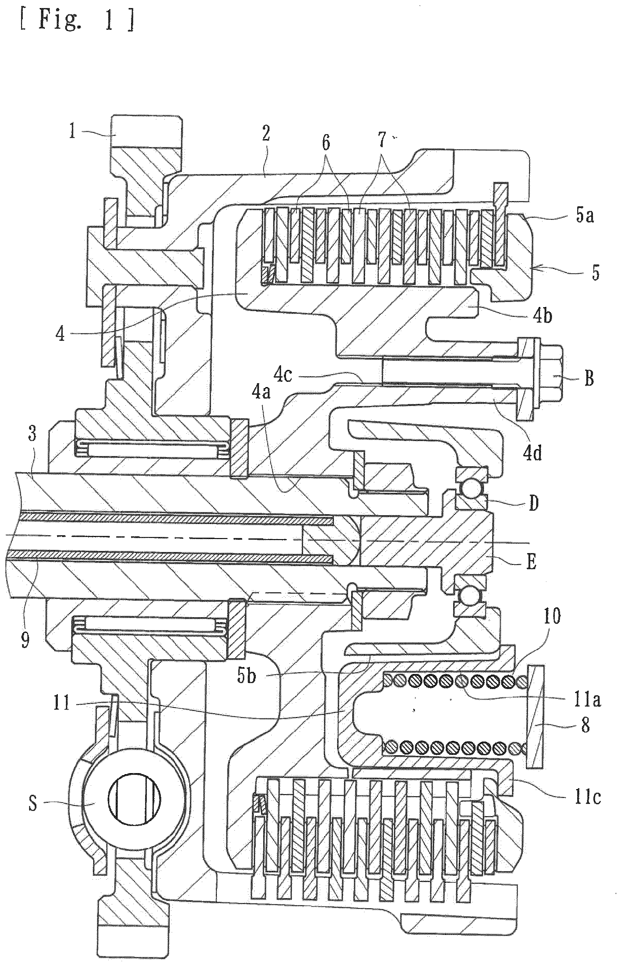

A power transmission device according to the present embodiment is disposed in a vehicle, such as a motorcycle, and appropriately transmits or cuts off driving power of an engine to the transmission and driving wheel side. As illustrated in Fig. 1, the power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. In the figure, the symbol S represents a damper, and the symbol D represents a ball bearing.

The gear 1 can rotate around the shaft 3 when driving power (rotational power) transmitted from the engine is input. The gear 1 is coupled to the clutch housing 2 by using rivets and the like. The clutch housing 2 is constituted by a cylindrical case member whose right end side in the figure is open. A plurality of drive-side clutch plates 6 are attached to the inner peripheral wall of the clutch housing 2. Each of the drive-side clutch plates 6 is constituted by a substantially annular plate, is fitted into a spline formed in the inner peripheral surface of the clutch housing 2, and thus is configured to be rotatable together with rotation of the clutch housing 2 and slidable in the axial direction (left-right directions in Fig. 1).

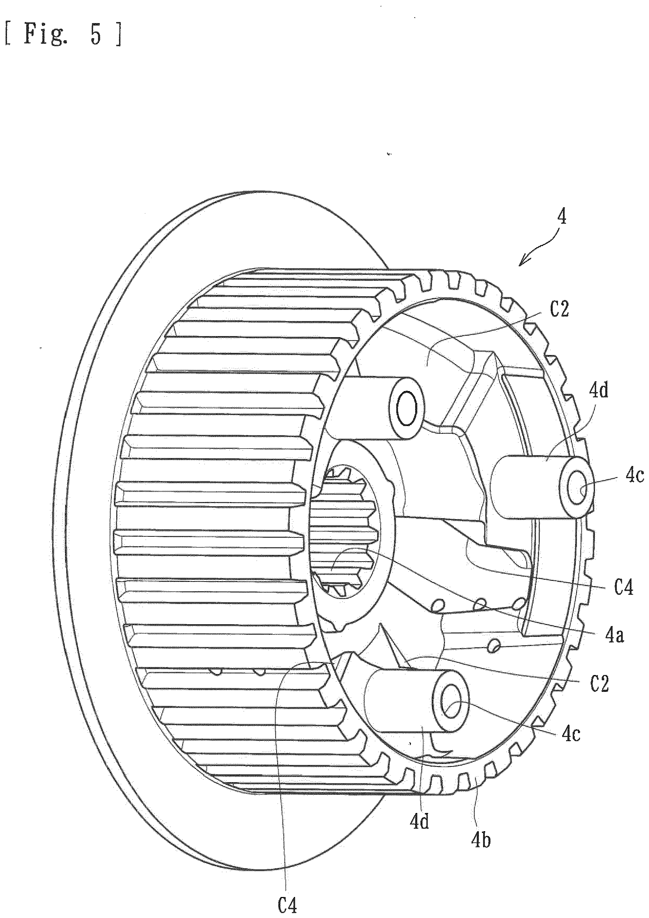

The clutch member 4 is constituted by members disposed in the clutch housing 2. As illustrated in Figs. 5 to 7, the clutch member 4 includes a central hole 4a through which the shaft 3 can be inserted, an outer peripheral wall 4b in which splines are formed, bolt holes 4c through which bolts B can be inserted, and boss portions 4d in which the bolt holes 4c are formed. Splines are formed in each of the inner peripheral surface of the central hole 4a and the outer peripheral surface of the shaft 3. The shaft 3 is spline-fitted and coupled to the central hole 4a, so that the shaft 3 also rotates when the clutch member 4 rotates. The driven-side clutch plates 7 are fitted and attached to the splines formed in the outer peripheral wall 4b.

To be more specific, the splines, which are formed in the outer peripheral wall 4b of the clutch member 4, are composed of protrusions and recesses that are integrally formed around substantially the entire periphery of the outer peripheral wall 4b. Because the driven-side clutch plates 7 engage with recessed grooves of the splines, movement of the driven-side clutch plates 7 in the rotational direction is restricted while movement of the driven-side clutch plates 7 relative to the clutch member 4 in the axial direction is allowed, and the driven-side clutch plates 7 can rotate together with the clutch member 4.

The driven-side clutch plates 7 are formed so as to be stacked alternately with the drive-side clutch plates 6. The drive-side clutch plates 6 and the driven-side clutch plates 7 that are adjacent to each other can be pressed against each other or the press-contact force can be released. That is, the drive-side clutch plates 6 and the driven-side clutch plates 7 are allowed to slide in the axial direction of the clutch member 4. When pressed by the pressure member 5 in the leftward direction in Fig. 1, the drive-side clutch plates 6 and the driven-side clutch plates 7 are pressed against each other, so that the rotational power of the clutch housing 2 can be transmitted to the shaft 3 via the clutch member 4. When pressing by the pressure member 5 is relieved, the press-contact force is released, the clutch member 4 stops following the rotation of the clutch housing 2 and stops, so that rotational power is not transmitted to the shaft 3.

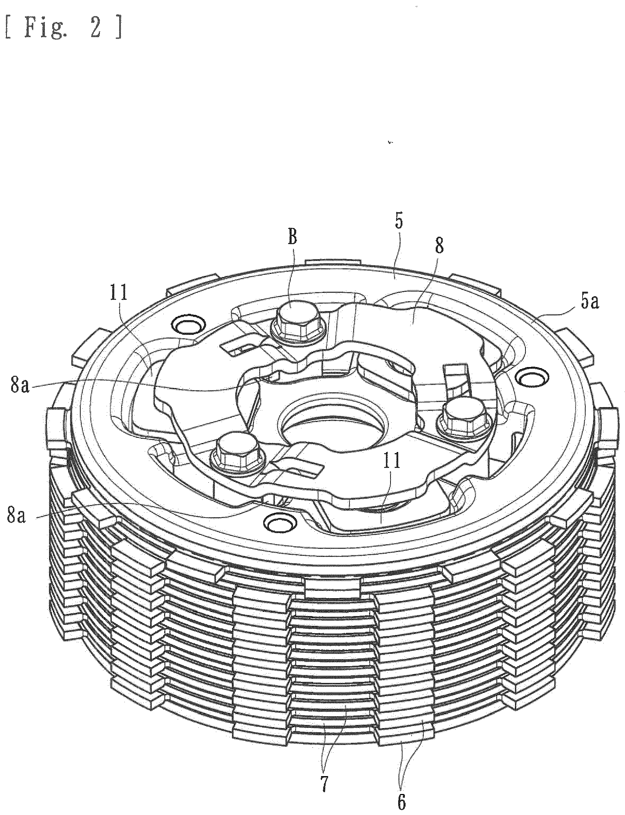

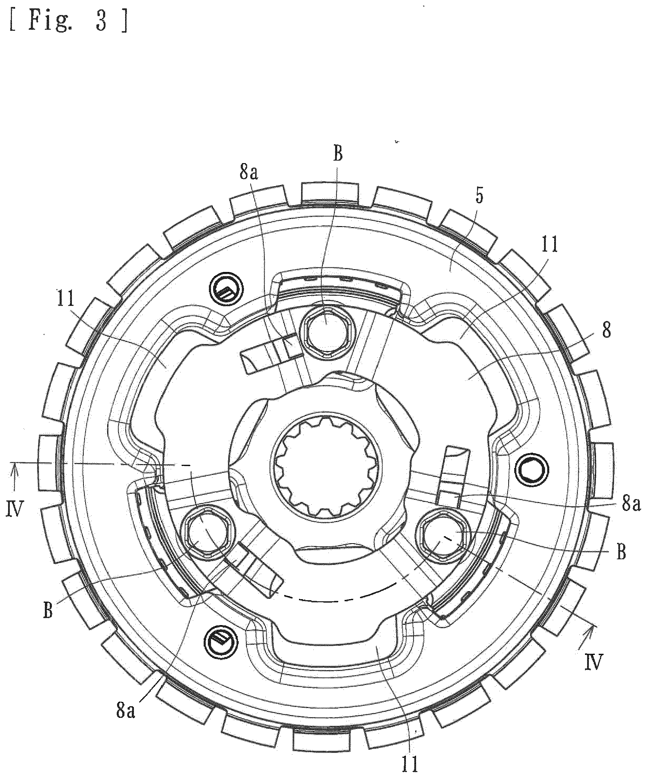

Moreover, as illustrated in Figs. 2 to 4, the fixing member 8 is fixed to the tip-end side of the boss portions 4d by using the bolts B, which are inserted through the bolt holes 4c. The clutch springs 10 as urging means are attached to the fixing member 8. To be specific, the fixing member 8 is constituted by an annular metal member, is fixed to the tip ends of the boss portions 4d by using the bolts B, and is mounted in such a way that the receiving members 11 are positioned between the bolts B and the other end portions of the clutch springs 10 are in contact therewith.

Each of the clutch spring 10 is constituted by a coil spring that is mounted in such a way that, in a state of being contained in the receiving member 11, one end thereof is in contact with the bottom surface side of the receiving member 11 (to be specific, a receiving portion 11b described below) and the other end thereof is in contact with the fixing member 8. The clutch spring 10 can constantly urge the pressure member 5 in a direction such that the drive-side clutch plates 6 and the driven-side clutch plates 7 are pressed against each other (that is, a direction such that the pressure member 5 becomes closer to the clutch member 4). Another urging means may be used as the clutch spring 10.

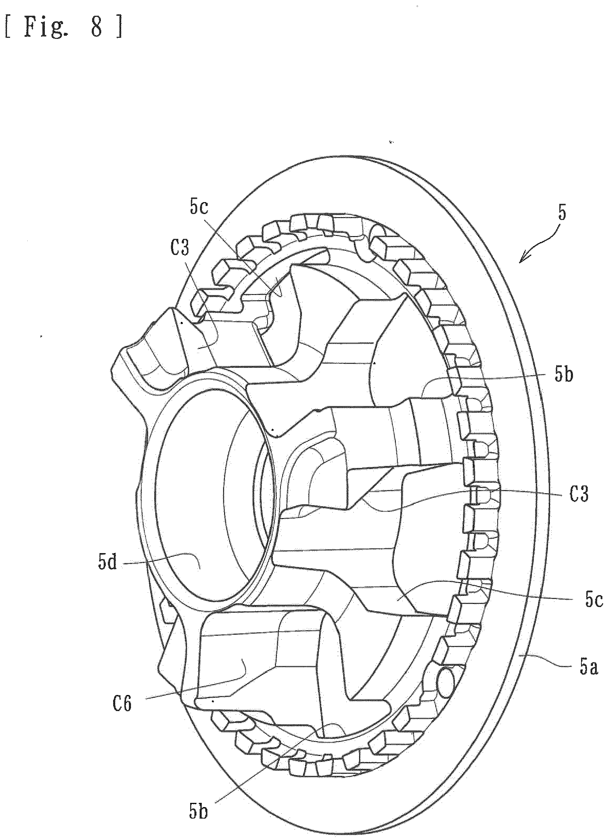

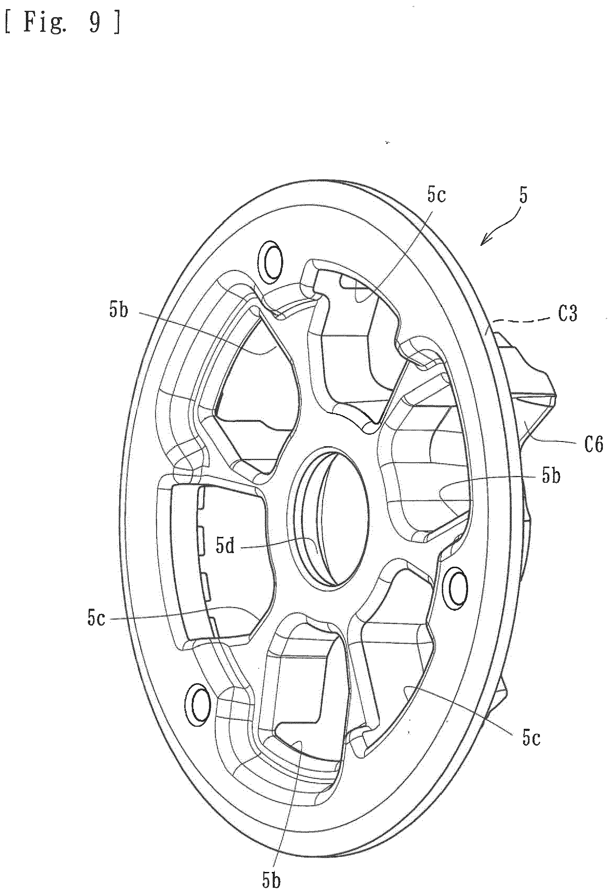

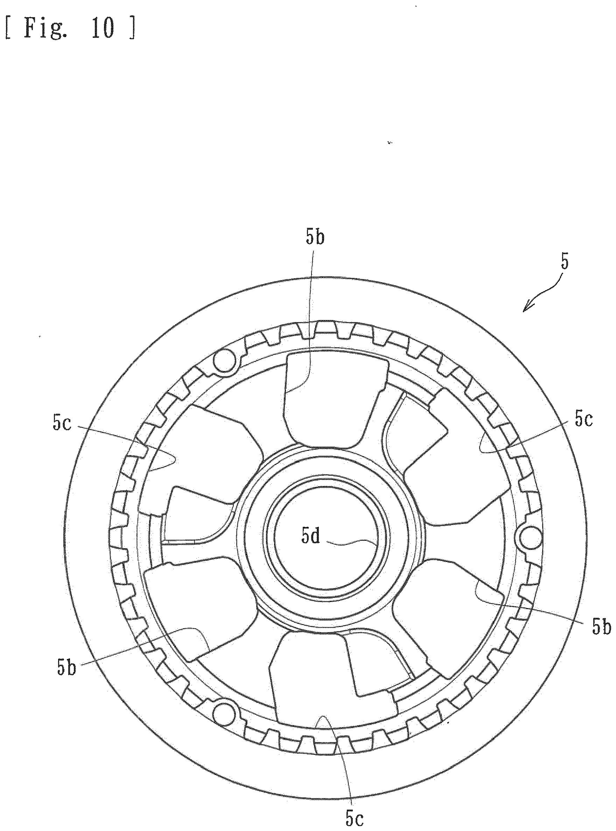

The pressure member 5 is attached to the clutch member 4 at a position on the right end side in Fig. 1 in such a way that the pressure member 5 is movable in the axial direction of the clutch member 4 (left-right directions in Fig. 1). The pressure member 5 can press the drive-side clutch plates 6 and the driven-side clutch plates 7 against each other or release the press-contact force in accordance with movement thereof relative to the clutch member 4 in the axial direction. To be more specific, as illustrated in Figs. 8 to 11, the pressure member 5 includes a flange portion 5a that can press the drive-side clutch plates 6 and the driven-side clutch plates 7 against each other, attachment holes 5b for attaching the receiving members 11, through-holes 5c, and a central hole 5d.

Among these, to the central hole 5d of the pressure member 5, a pressed member E is attached via the ball bearing D as illustrated in Fig. 1. The pressed member E is attached to the tip end side of the shaft 3 and is movable so as to follow the push rod 9. When a driver operates operation means, such as a clutch lever or the like (not shown), to cause the push rod 9 to protrude in the rightward direction in the figure, the pressed member E moves in the same direction. Thus, the pressure member 5 can be moved in the rightward direction in Fig. 1 (direction away from the clutch member 4) against the urging forces of the clutch springs 10.

When the pressure member 5 moves in the rightward direction, the press-contact force between the drive-side clutch plates 6 and the driven-side clutch plates 7 is released, and rotational power input to the gear 1 and the clutch housing 2 is cut off and not transmitted to the clutch member 4 and the shaft 3 (clutch is disengaged). When the driver stops operating the operation means, the pressure member 5 moves in the leftward direction in Fig. 1 due to the urging forces of the clutch springs 10, and the drive-side clutch plates 6 and the driven-side clutch plates 7 are pressed against each other. Thus, rotational power input to the gear 1 and the clutch housing 2 is transmitted to the clutch member 4 and the shaft 3 (clutch is engaged).

That is, the pressure member 5 is configured to be capable of pressing the drive-side clutch plates 6 and the driven-side clutch plates 7 against each other or releasing the press-contact force in accordance with movement thereof relative to the clutch member 4 in the axial direction. The push rod 9 and the pressed member E, which are activated by an operation performed by a driver and which can release the press-contact force between the drive-side clutch plates 6 and the driven-side clutch plates 7 by moving the pressure member 5 against the urging force of the clutch spring 10 (urging means) as described above, constitute "activation means" of the present invention.

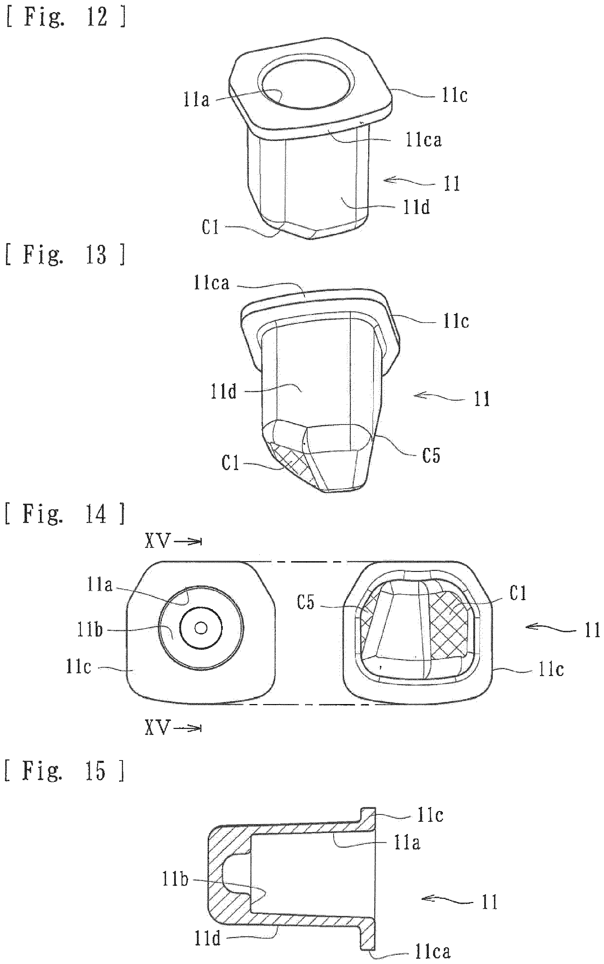

Moreover, the attachment holes 5b are formed in the pressure member 5 at a plurality of (three) positions on the same circle at regular intervals, and the receiving member 11 is attached to each of the attachment holes 5b. The receiving member 11, which is attached to the attachment hole 5b of the pressure member 5, can make contact with one end of the clutch spring 10 and receive the urging force thereof, and is separate from the pressure member 5. To be specific, as illustrated in Figs. 12 to 15, the receiving member 11 according to the present embodiment is constituted by a cup-shaped member that includes: a recessed portion 11a that contains the clutch spring 10, the receiving portion 11b that is formed in the recessed portion 11a and that makes contact with one end portion of the clutch spring 10 and receives the urging force, and a flange portion 11c that makes contact with the pressure member 5 and that can transmit the urging force of the clutch spring 10 to the pressure member 5.

Among these, the flange portion 11c is formed on the opening side of the receiving member 11. When the receiving member 11 is attached to the attachment hole 5b, the flange portion 11c makes contact with the opening edge of the attachment hole 5b. After attaching the receiving member 11 to the attachment hole 5b, by mounting the clutch spring 10 into the recessed portion 11a in such a way that one end portion thereof is in contact with the receiving portion 11b, the urging force of the clutch spring 10 is transmitted to the pressure member 5 side via the flange portion 11c of the receiving members 11, and the drive-side clutch plates 6 and the driven-side clutch plates 7 can be pressed against each other by using the transmitted urging force.

Moreover, the power transmission device according to the present embodiment includes: a press-contact assisting cam that can increase the press-contact force between the drive-side clutch plates 6 and the driven-side clutch plates 7 if the pressure member 5 and the clutch member 4 rotate relative to each other when rotational power input to the gear 1 as an input member becomes capable of being transmitted to the shaft 3 as an output member; and a back-torque limiting cam that reduces the press-contact force between the drive-side clutch plates 6 and the driven-side clutch plates 7 if the pressure member 5 and the clutch member 4 rotate relative to each other when the rotation speed of the shaft 3 as an output member exceeds the rotation speed of the gear 1 as an input member. Cam surfaces (first to sixth cam surfaces C1 to C6) that constitute the press-contact assisting cam and the back-torque limiting cam are shown by shading (cross-hatching) in the figures.

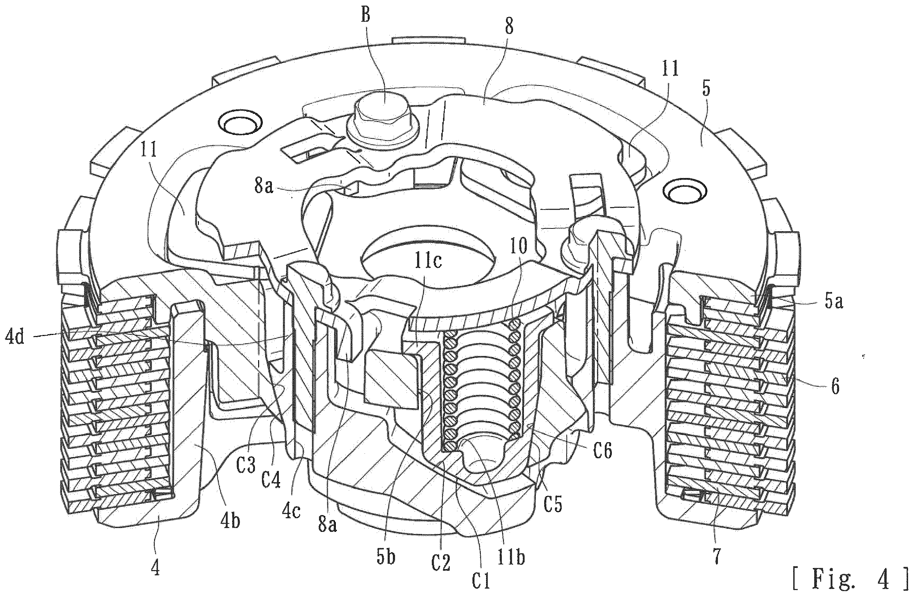

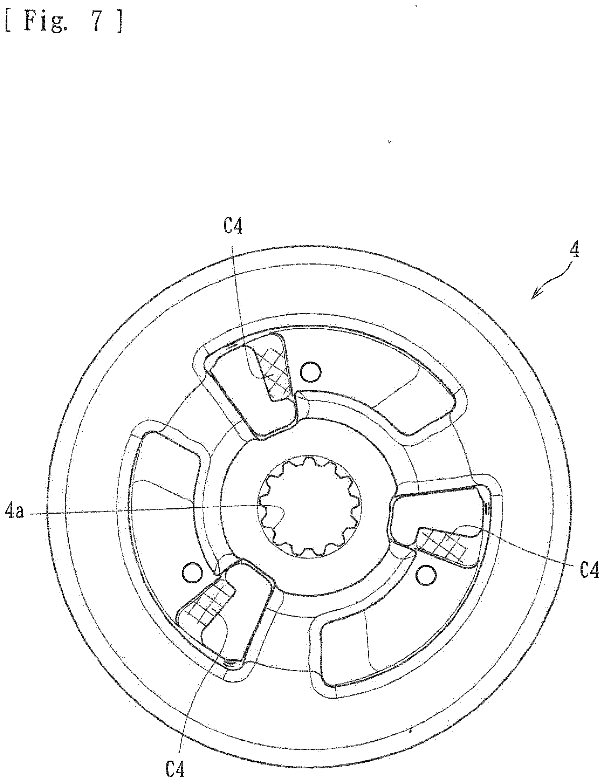

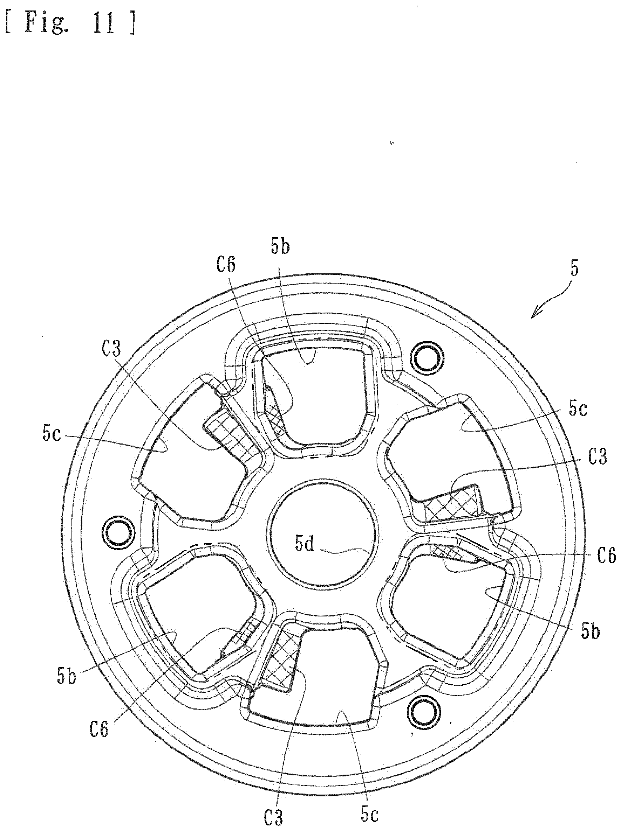

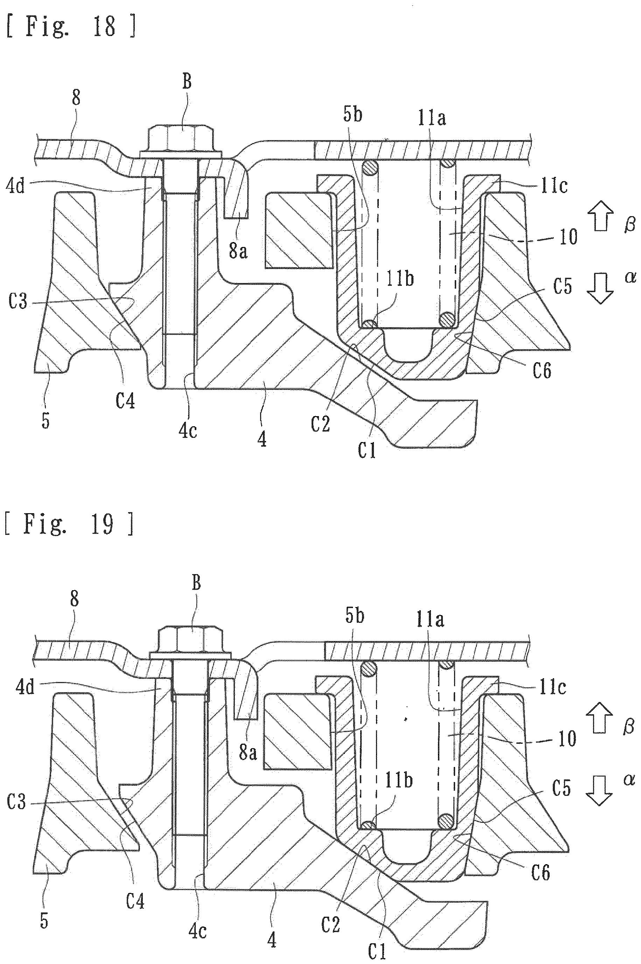

As illustrated in Figs. 4 and 18, the press-contact assisting cam according to the present embodiment is configured by disposing the third cam surfaces C3 and the fourth cam surfaces C4, which are respectively formed in the pressure member 5 and the clutch member 4, so as to face each other. That is, when assembling the clutch member 4 and the pressure member 5 together, the third cam surfaces C3 (see Fig. 11) formed in the pressure member 5 and the fourth cam surfaces C4 (see Fig. 7) formed in the clutch member 4 are disposed so as to face each other. Thus, if the pressure member 5 and the clutch member 4 rotate relative to each other when rotational power input to the gear 1 becomes capable of being transmitted to the shaft 3, the pressure member 5 is moved in the direction a in Fig. 18 by the cam function of the third cam surfaces C3 and the fourth cam surfaces C4 so that the pressure member 5 becomes closer to the clutch member 4, and thereby the press-contact force between the drive-side clutch plates 6 and the driven-side clutch plates 7 is increased.

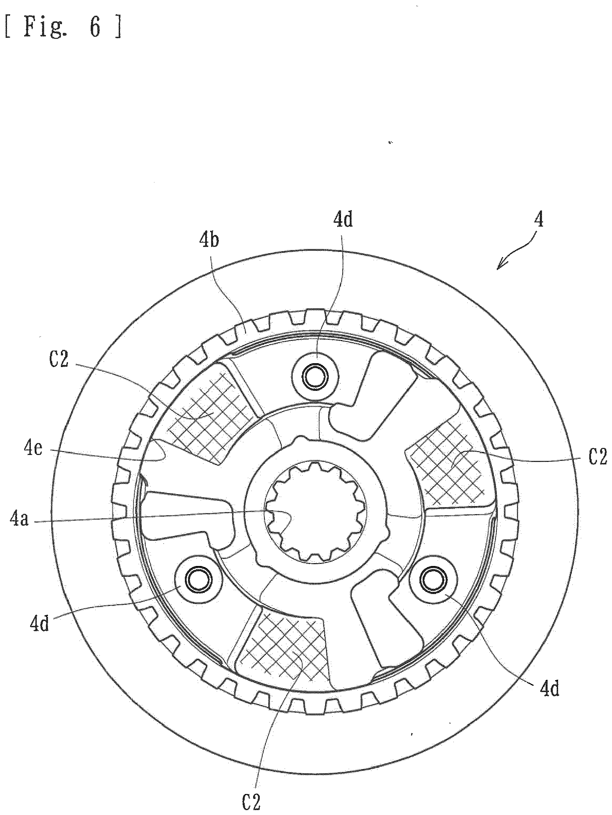

As illustrated in Figs. 4 and 19, the back-torque limiting cam according to the present embodiment is configured by disposing the first cam surfaces C1 and the second cam surfaces C2, which are respectively formed in the receiving members 11 and the clutch member 4, so as to face each other. That is, when assembling the clutch member 4, the pressure member 5, and the receiving members 11 together, the first cam surfaces C1 (see Figs. 13 and 14) formed in the bottom side surfaces of the receiving members 11 and the second cam surfaces C2 (see Fig. 6) formed in the clutch member 4 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 19 by the cam function of the first cam surfaces C1 and the second cam surfaces C2 so as to reduce the urging force of the clutch springs 10 transmitted to the pressure member 5, and thereby the press-contact force between the drive-side clutch plates 6 and the driven-side clutch plates 7 is reduced. Reduction of the press-contact force refers to a state in which rotational-power transmitting capacity is reduced due to sliding of the drive-side clutch plates 6 and the driven-side clutch plates 7 over each other.

Moreover, as illustrated in Fig. 14, in each of the receiving members 11 according to the present embodiment, the fifth cam surface C5 is formed on a side opposite from the first cam surface C1; and the sixth cam surfaces C6 (see Fig. 11), each of which faces the fifth cam surface C5, is formed in the pressure member 5. That is, in both side surfaces of the bottom portion of each of the receiving members 11, the first cam surface C1 and the fifth cam surface C5 are respectively formed; and the back-torque limiting cam is constituted by the first cam surfaces C1, the second cam surfaces C2, the fifth cam surfaces C5, and the sixth cam surfaces C6.

When assembling the clutch member 4, the pressure member 5, and the receiving members 11 together, the first cam surfaces C1 formed in the receiving members 11 and the second cam surfaces C2 formed in the clutch member 4 are disposed so as to face each other, and the fifth cam surfaces C5 formed in the receiving members 11 and the sixth cam surfaces C6 formed in the pressure member 5 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 19 by the cam function of the first cam surfaces C1 and the second cam surfaces C2 and the cam function of the fifth cam surfaces C5 and the sixth cam surfaces C6, and thereby the press-contact force between the drive-side clutch plates 6 and the driven-side clutch plates 7 is reduced.

Thus, when the back-torque limiting cam functions, the receiving members 11 receive both of the cam function of the first cam surfaces C1 and the second cam surfaces C2 and the cam function of the fifth cam surfaces C5 and the sixth cam surfaces C6. Although the back-torque limiting cam according to the present embodiment includes the fifth cam surfaces C5 and the sixth cam surfaces C6, in addition to the first cam surfaces C1 and the second cam surfaces C2, the back-torque limiting cam may have only the first cam surfaces C1 and the second cam surfaces C2.

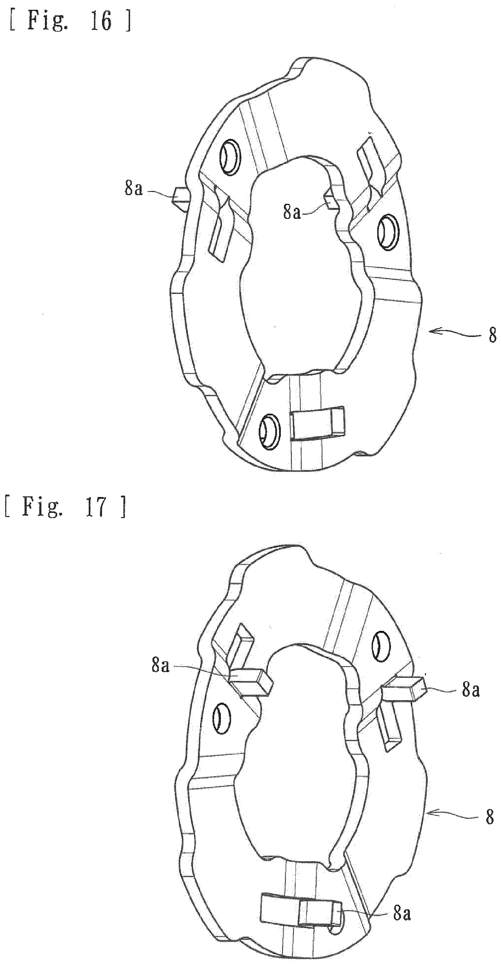

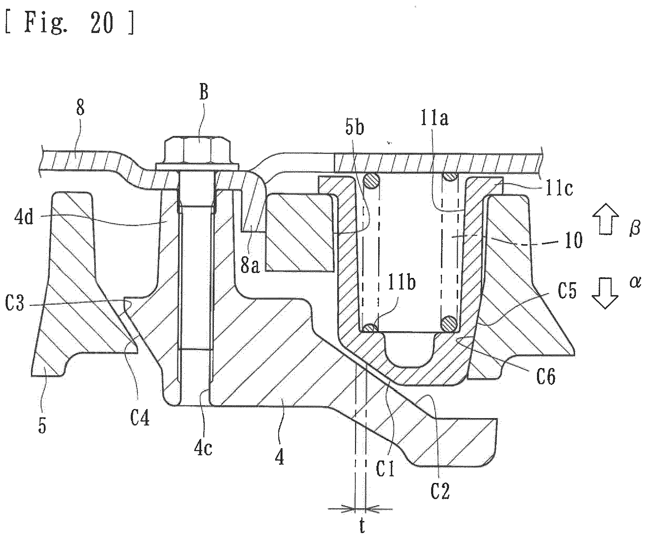

Here, the power transmission device according to the present embodiment includes a rotation restricting portion 8a that is capable of restricting rotation, relative to the clutch member 4, of the pressure member 5 that has moved due to activation of the push rod 9 and the pressed member E (activation means) and is capable of maintaining the clearance t (see Fig. 20) between a pair of cam surfaces (the first cam surface C1 and the second cam surface C2) that constitute a back-torque limiting cam. To be specific, as illustrated in Figs. 16 and 17, the rotation restricting portion 8a according to the present embodiment is formed by bending a predetermined part of the fixing member 8.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 20, the pressure member 5 interferes with the rotation restricting portion 8a and movement of the pressure member 5 in the direction is restricted, and the clearance between t between the first cam surface C1 and the second cam surface C2, which constitute the back-torque limiting cam, is maintained. Thus, the rotation restricting portion 8a is configured to be capable of preventing the pressure member 5 from rotating and the receiving member 11 from becoming stuck onto the second cam surface C2 when the activation means (the push rod 9 and the pressed member E) are activated.

The present embodiment includes the rotation restricting portion 8a that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Moreover, the rotation restricting portion 8a according to the present embodiment is formed in a predetermined part of the fixing member 8 (in particular, integrally formed by bending a predetermined part of the fixing member 8). Therefore, by performing replacement to the fixing member 8 having the rotation restricting portion 8a in an existing power transmission device, it is possible to restrict rotation of the pressure member 5 when a driver disengages the clutch, and it is possible to improve responsiveness when the driver subsequently engages the clutch and to improve operability.

Next, a power transmission device according to a second embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. Elements that are the same as those of the first embodiment will be denoted by the same numerals, and detailed descriptions of such elements will be omitted.

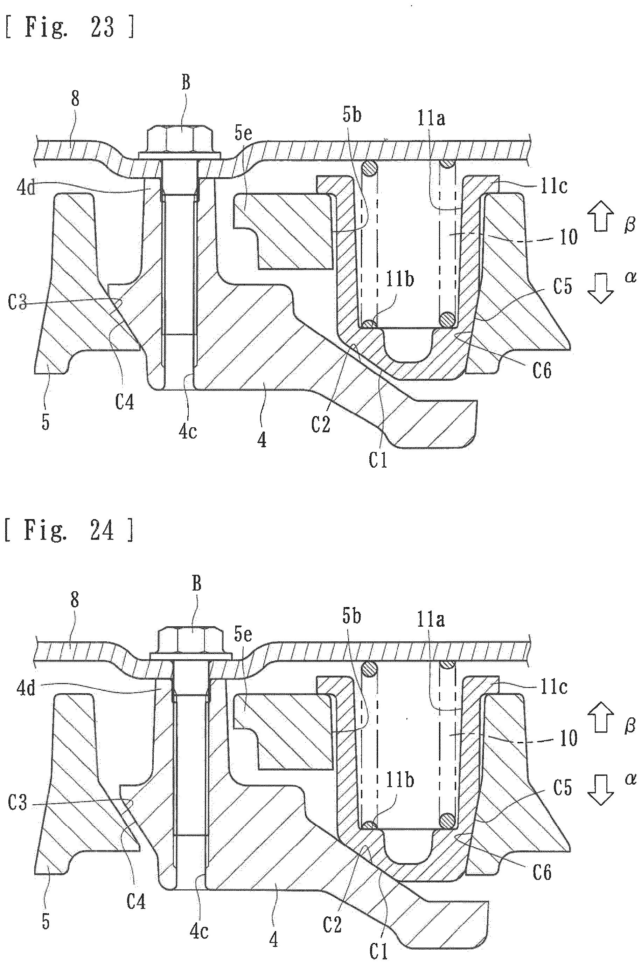

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 23 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4, the pressure member 5, and the receiving members 11 together, the first cam surfaces C1 formed in the bottom side surfaces of the receiving members 11 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the receiving members 11 are moved in the direction β in Fig. 24 by the cam function of the first cam surfaces C1 and the second cam surfaces C2 so as to reduce the urging force of the clutch springs 10 transmitted to the pressure member 5; and thereby the press-contact force between the drive-side clutch plates 6 and the driven-side clutch plates 7 is reduced.

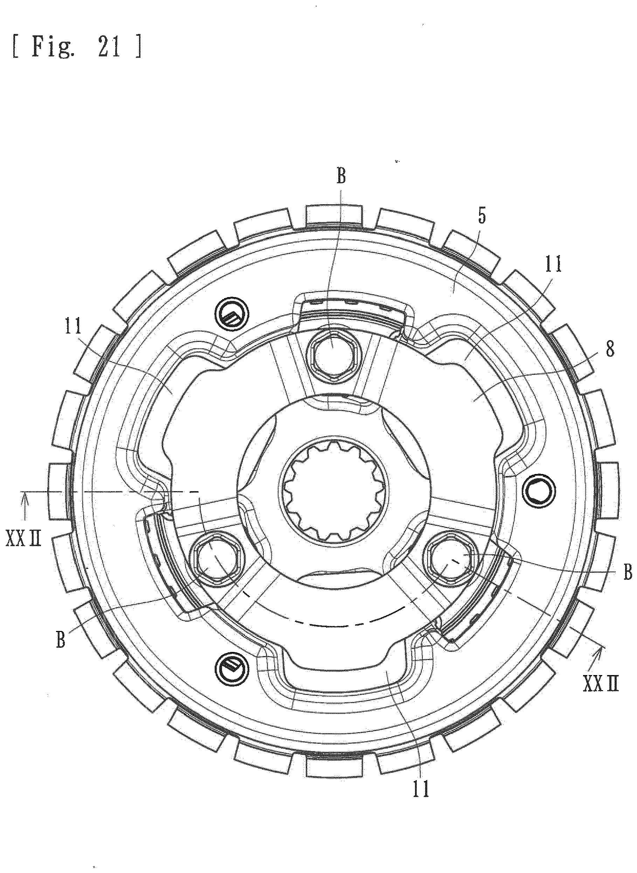

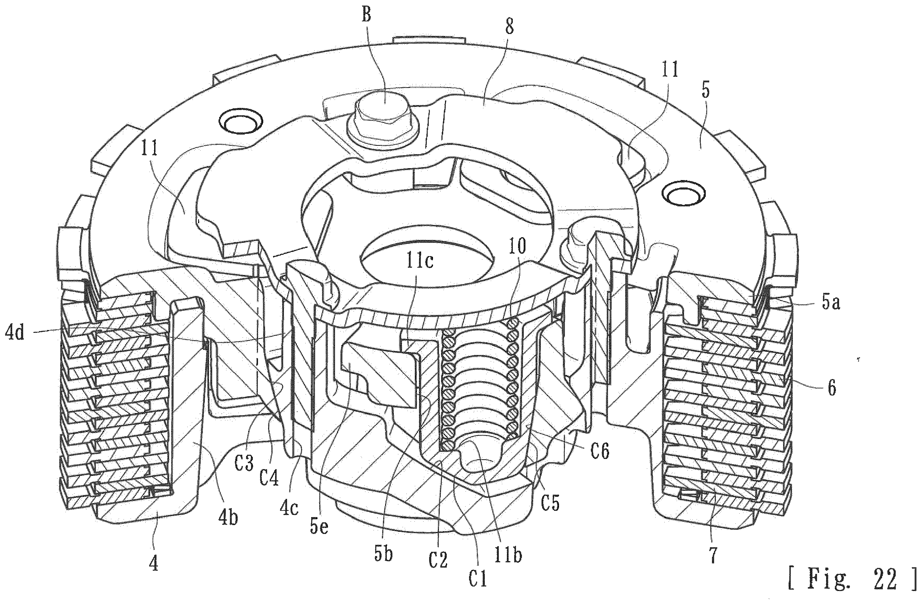

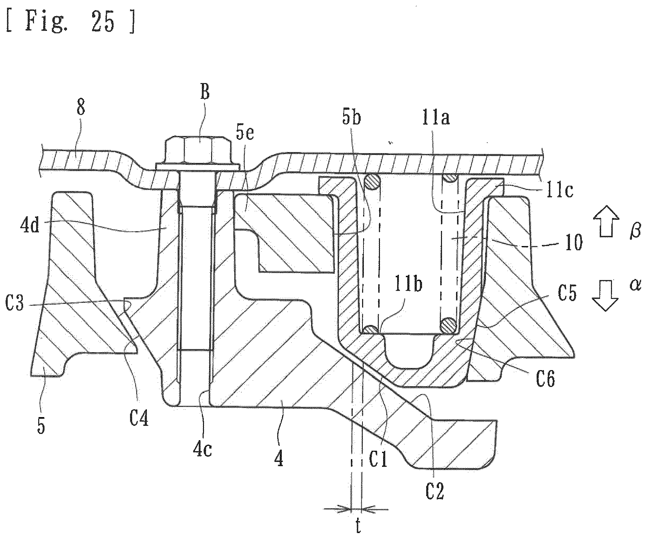

Here, as illustrated in Figs. 21 and 22, a rotation restricting portion 5e is integrally formed in a predetermined part of the pressure member 5 according to the present embodiment. The rotation restricting portion 5e is capable of restricting rotation, relative to the clutch member 4, of the pressure member 5 that has moved due to activation of the push rod 9 and the pressed member E (activation means) and is capable of maintaining the clearance t (see Fig. 25) between a pair of cam surfaces (the first cam surface C1 and the second cam surface C2) that constitute the back-torque limiting cam. As illustrated in Fig. 22, the rotation restricting portion 5e is formed by causing a predetermined part of the pressure member 5 to protrude in the rotation direction of the pressure member 5.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 25, the rotation restricting portion 5e formed in the pressure member 5 interferes with the boss portion 4d of the clutch member 4 and movement of the pressure member 5 in the direction is restricted, and the clearance t between the first cam surface C1 and the second cam surface C2, which constitute the back-torque limiting cam, is maintained. Thus, the rotation restricting portion 5e is configured to be capable of preventing the pressure member 5 from rotating and the receiving member 11 from becoming stuck onto the second cam surface C2 when the activation means (the push rod 9 and the pressed member E) are activated. A part that interferes with the rotation restricting portion 5e is not limited to the boss portion 4d of the clutch member 4, and may be another part (including a separately and newly formed part).

The present embodiment includes the rotation restricting portion 5e that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Furthermore, the rotation restricting portion 5e according to the present embodiment is formed in a predetermined part of the pressure member 5, and the rotation restricting portion 5e formed in the pressure member 5 that has moved due to activation of activation means (the push rod 9 and the pressed member E) interferes with the boss portion 4d of the clutch member 4 and restricts rotation of the pressure member 5. Therefore, by partially changing the shape of the pressure member 5, it is possible to restrict rotation of the pressure member 5 when a driver disengages the clutch, and it is possible to improve responsiveness when the driver subsequently engages the clutch and to improve operability.

Next, a power transmission device according to a third embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. Elements that are the same as those of the first embodiment will be denoted by the same numerals, and detailed descriptions of such elements will be omitted.

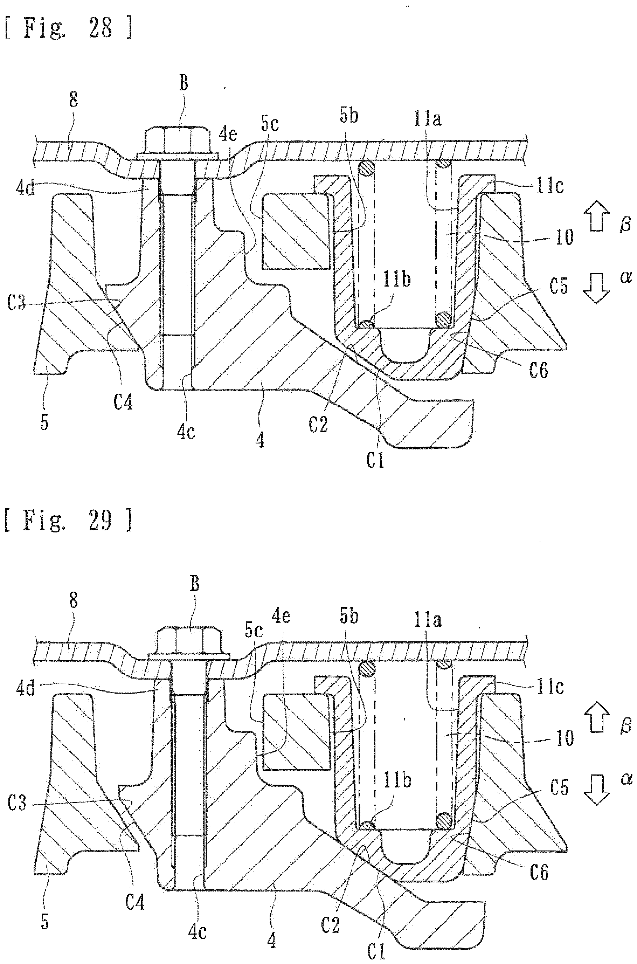

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 28 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4, the pressure member 5, and the receiving members 11 together, the first cam surfaces C1 formed in the bottom side surfaces of the receiving members 11 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the receiving members 11 are moved in the direction β in Fig. 29 by the cam function of the first cam surfaces C1 and the second cam surfaces C2 so as to reduce the urging force of the clutch springs 10 transmitted to the pressure member 5; and thereby the press-contact force between the drive-side clutch plates 6 and the driven-side clutch plates 7 is reduced.

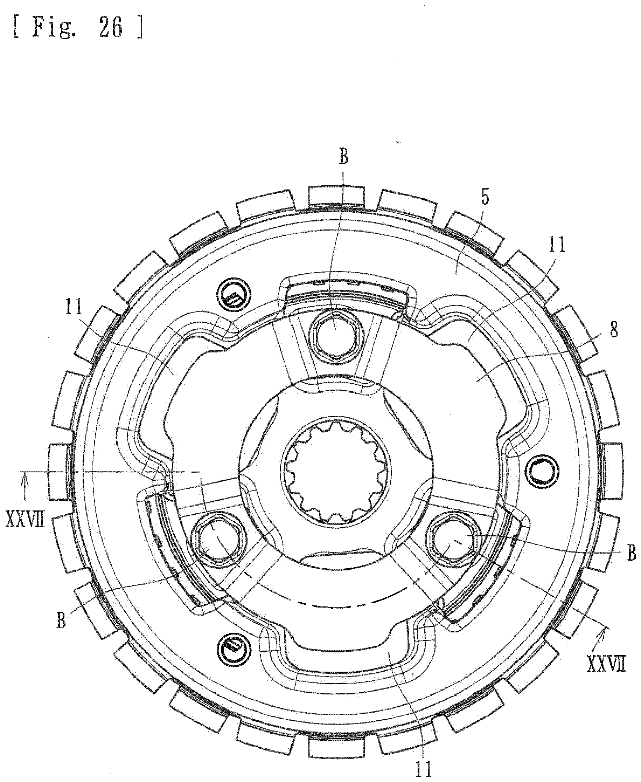

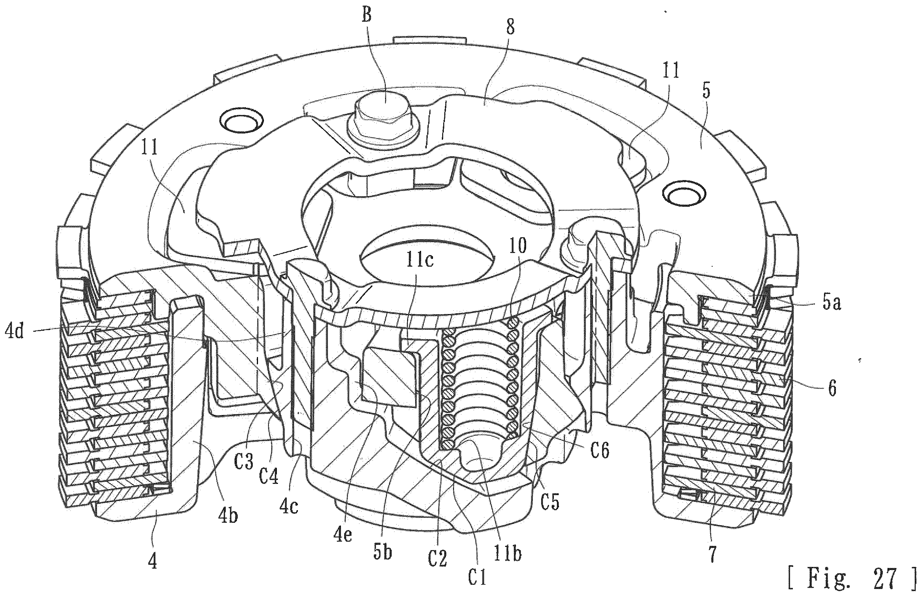

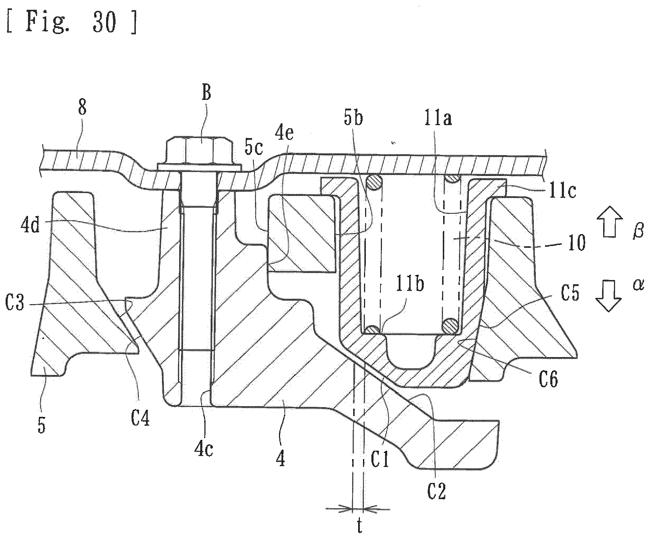

Here, as illustrated in Figs. 26 and 27, a rotation restricting portion 4e is integrally formed in a predetermined part of the clutch member 4 according to the present embodiment. The rotation restricting portion 4e is capable of restricting rotation, relative to the clutch member 4, of the pressure member 5 that has moved due to activation of the push rod 9 and the pressed member E (activation means) and is capable of maintaining the clearance t (see Fig. 30) between a pair of cam surfaces (the first cam surface C1 and the second cam surface C2) that constitute the back-torque limiting cam. As illustrated in Fig. 27, the rotation restricting portion 4e is formed by causing a predetermined part of the clutch member 4 (a predetermined part of the boss portion 4d in the present embodiment) to protrude in the rotation direction of the pressure member 5.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 30, the pressure member 5 interferes with the rotation restricting portion 4e formed in the clutch member 4 and movement of the pressure member 5 in the direction is restricted, and the clearance t between the first cam surface C1 and the second cam surface C2, which constitute the back-torque limiting cam, is maintained. Thus, the rotation restricting portion 4e is configured to be capable of preventing the pressure member 5 from rotating and the receiving member 11 from becoming stuck onto the second cam surface C2 when the activation means (the push rod 9 and the pressed member E) are activated. A part that interferes with the rotation restricting portion 4e may be a separate and newly formed part of the pressure member 5.

The present embodiment includes the rotation restricting portion 4e that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the present embodiment includes the receiving member 11 that is constituted by a separate member attached to the pressure member 5, that receives an urging force of the clutch spring 10 (urging means) on the pressure member 5 side, and that is capable of transmitting the urging force to the pressure member 5; and the back-torque limiting cam has the first cam surface C1, which is one cam surface, formed in the receiving member 11 and the second cam surface C2, which is the other cam surface, formed in the clutch member 4. Therefore, with the present embodiment, by restricting rotation of the pressure member 5 when a driver disengages the clutch, it is possible to prevent the receiving member 11 from becoming stuck onto the second cam surface C2, which constitutes the back-torque limiting cam, and it is possible to improve responsiveness when the driver subsequently engages the clutch and to improve operability.

Furthermore, the rotation restricting portion 4e according to the present embodiment is formed in a predetermined part of the clutch member 4, and the pressure member 5 that has moved due to activation of activation means (the push rod 9 and the pressed member E) interferes with the rotation restricting portion 4e formed in the clutch member 4 and restricts rotation of the pressure member 5. Therefore, by partially changing the shape of the clutch member 4, it is possible to restrict rotation of the pressure member 5 when a driver disengages the clutch, and it is possible to improve responsiveness when the driver subsequently engages the clutch and to improve operability.

Next, a power transmission device according to a fourth embodiment of the present invention will be described.

As with the first embodiment, a power transmission device according to the present embodiment is disposed in a vehicle, such as a motorcycle, and appropriately transmits or cuts off driving power of an engine to the transmission and driving wheel side. The power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, and clutch springs 10 as urging means. Elements that are the same as those of the first embodiment will be denoted by the same numerals, and detailed descriptions of such elements will be omitted. However, the power transmission device according to the present embodiment does not have the receiving members 11 included in the first to third embodiments.

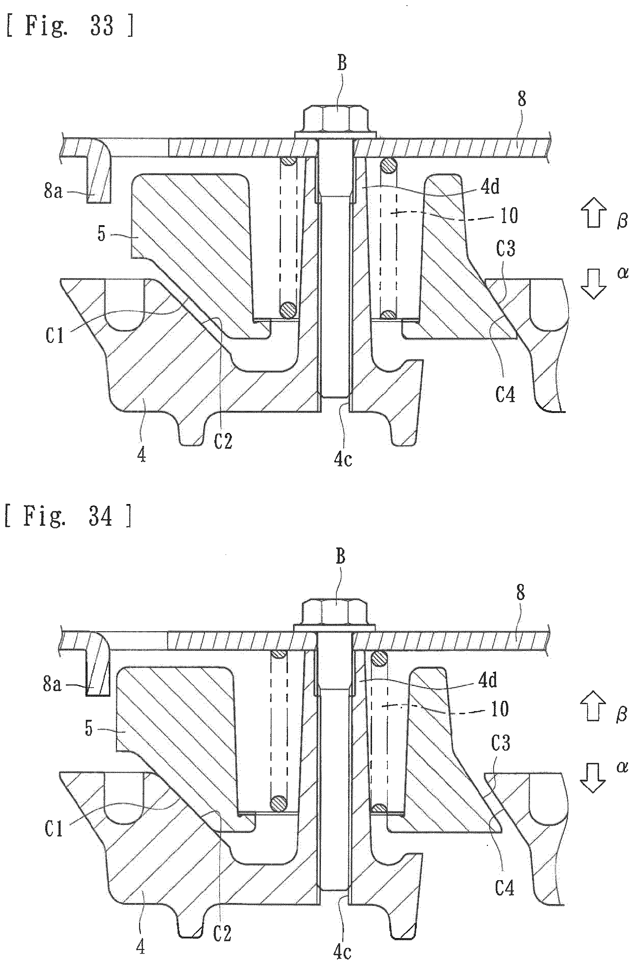

The press-contact assisting cam according to the present embodiment is configured as follows: when assembling the clutch member 4 and the pressure member 5 together, the third cam surfaces C3 formed in the pressure member 5 and the fourth cam surfaces C4 formed in the clutch member 4 are disposed so as to face each other; thus, if the pressure member 5 and the clutch member 4 rotate relative to each other when rotational power input to the gear 1 becomes capable of being transmitted to the shaft 3, the pressure member 5 is moved in the direction α in Fig. 33 by the cam function of the third cam surfaces C3 and the fourth cam surfaces C4 so that the pressure member 5 becomes closer to the clutch member 4; and thereby the press-contact force between the drive-side clutch plates 6 and the driven-side clutch plates 7 is increased.

The back-torque limiting cam according to the present embodiment is configured as follows: when assembling the clutch member 4 and the pressure member 5 together, the first cam surfaces C1 formed in the pressure member 5 and the second cam surfaces C2 formed in the clutch member 4 are disposed so as to face each other; thus, if the pressure member 5 and the clutch member 4 rotate relative to each other when the rotation speed of the shaft 3 exceeds the rotation speed of the gear 1, the pressure member 5 is moved in the direction β in Fig. 34 by the cam function of the first cam surfaces C1 and the second cam surfaces C2; and thereby the press-contact force between the drive-side clutch plates 6 and the driven-side clutch plates 7 is reduced.

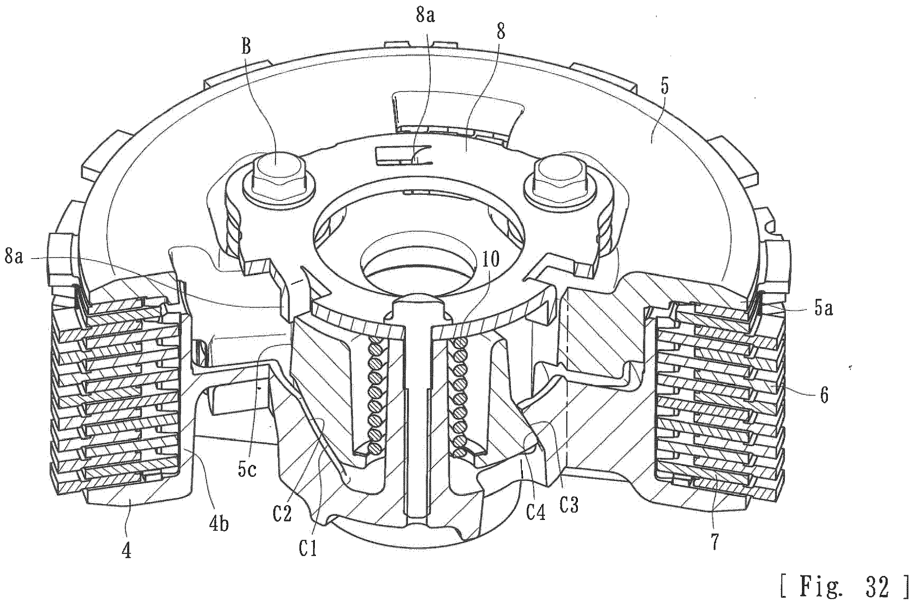

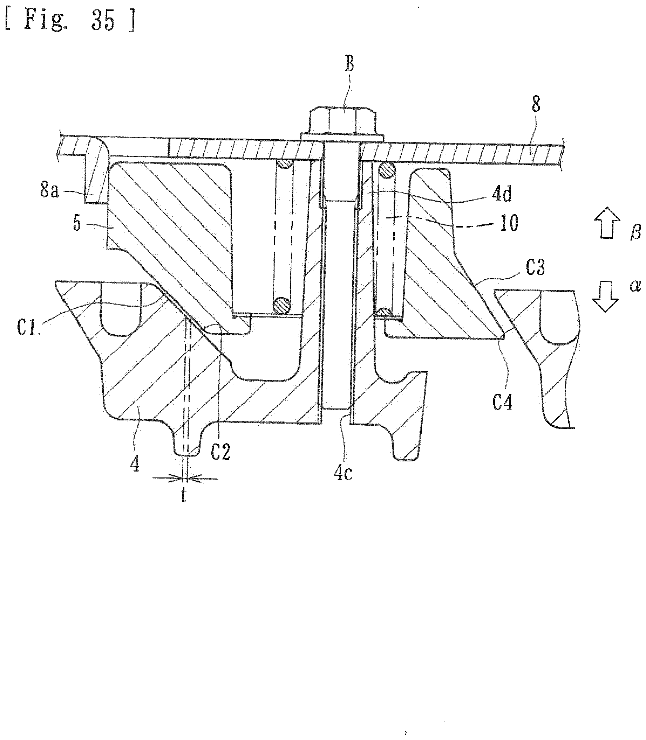

Here, as illustrated in Figs. 16 and 17, a rotation restricting portion 8a is integrally formed in a predetermined part of the fixing member 8 according to the present embodiment. The rotation restricting portion 8a is capable of restricting rotation, relative to the clutch member 4, of the pressure member 5 that has moved due to activation of the push rod 9 and the pressed member E (activation means) and is capable of maintaining the clearance t (see Fig. 35) between a pair of cam surfaces (the first cam surface C1 and the second cam surface C2) that constitute the back-torque limiting cam. As illustrated in Fig. 32, the rotation restricting portion 8a is formed by bending a predetermined part of the fixing member 8.

That is, when the push rod 9 and the pressed member E (activation means) are activated, the pressure member 5 moves, and the press-contact force between the drive-side clutch plates 6 and the driven-side clutch plates 7 is released (the clutch is disengaged). Then, as illustrated in Fig. 35, the pressure member 5 interferes with the rotation restricting portion 8a and movement of the pressure member 5 in the direction is restricted, and the clearance t between the first cam surface C1 and the second cam surface C2, which constitute the back-torque limiting cam, is maintained. Thus, the rotation restricting portion 8a is configured to be capable of preventing the pressure member 5 from rotating and the first cam surface C1 from becoming stuck onto the second cam surface C2 when the activation means (the push rod 9 and the pressed member E) are activated.

The present embodiment includes the rotation restricting portion 8a that is capable of restricting rotation, relative to the clutch member 4, (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Therefore, with the present embodiment, by restricting rotation of the pressure member 5 when a driver disengages the clutch, it is possible to improve responsiveness when the driver subsequently engages the clutch and to improve operability.

Moreover, the rotation restricting portion 8a according to the present embodiment is formed in a predetermined part of the fixing member 8 (in particular, integrally formed by bending a predetermined part of the fixing member 8). Therefore, by performing replacement to the fixing member 8 having the rotation restricting portion 8a in an existing power transmission device, it is possible to restrict rotation of the pressure member 5 when a driver disengages the clutch, and it is possible to improve responsiveness when the driver subsequently engages the clutch and to improve operability.

The present invention is not limited to the embodiments described above. For example, the present invention may be applied to a power transmission device that does not have the press-contact assisting cam (the third cam surface C3 and the fourth cam surface C4). Even in this case, the power transmission device includes the rotation restricting portion (8a, 4e, 5e) that is capable of restricting rotation, relative to the clutch member 4 (rotation in a direction such that the first cam surface C1 and the second cam surface C2 become closer to each other) of the pressure member 5 that has moved due to activation of activation means (the push rod 9 and the pressed member E) and is capable of maintaining the clearance between the pair of cam surfaces (the first cam surface C1 and the second cam surface C2) that constitute the back-torque limiting cam. Thus, by restricting rotation of the pressure member 5 when a driver disengages the clutch, it is possible to improve responsiveness when the driver subsequently engages the clutch and to improve operability.

The number of receiving members 11 attached and the shape of each of the receiving members 11 are not limited. The present invention is applicable to a power transmission device that does not have a receiving member 11 as in the fourth embodiment. The power transmission device according to the present invention can be used as a multiple disc clutch for a motorcycle, an automobile, a three-wheeled or four-wheeled ATV, a general-purpose machine, or the like.

### Industrial Applicability

The present invention is applicable to any power transmission device that has a different outer shape or that has additional functions, as long as the power transmission device has a rotation restricting portion that is capable of restricting rotation, relative to a clutch member, of a pressure member that has moved due to activation of activation means and is capable of maintaining a clearance between a pair of cam surfaces that constitute a back-torque limiting cam.

### Reference Signs List

- 1: gear (input member)
- 2: clutch housing
- 3: shaft (output member)
- 4: clutch member
- 4a: central hole
- 4b: outer peripheral wall
- 4c: bolt hole
- 4d: boss portion
- 4e: rotation restricting portion
- 5: pressure member
- 5a: flange portion
- 5b: attachment hole
- 5c: through-hole
- 5d: central hole
- 5e: rotation restricting portion
- 6: drive-side clutch plate
- 7: driven-side clutch plate
- 8: fixing member
- 8a: rotation restricting portion
- 9: push rod (activation means)
- 10: clutch spring (urging means)
- 11: receiving member
- 11a: recessed portion
- 11b: receiving portion
- 11c: flange portion
- C1: first cam surface
- C2: second cam surface
- C3: third cam surface
- C4: fourth cam surface
- C5: fifth cam surface
- C6: sixth cam surface

## Claims

1. A power transmission device comprising:
a clutch housing (2) that rotates together with rotation of an input member and to which a plurality of drive-side clutch plates (6) are attached;
a clutch member (4) to which a plurality of driven-side clutch plates (7) that are formed alternately with the drive-side clutch plates (6) of the clutch housing (2) are attached and to which an output member is coupled;
a pressure member (5) that is attached to the clutch member (4) and that is capable of pressing the drive-side clutch plates (6) and the driven-side clutch plates (7) against each other or releasing a press-contact force in accordance with movement thereof relative to the clutch member (4) in an axial direction;
urging means (10) that urges the pressure member (5) in a direction such that the drive-side clutch plates (6) and the driven-side clutch plates (7) are pressed against each other;
activation means that is activated by an operation performed by a driver and that is capable of releasing a press-contact force between the drive-side clutch plates (6) and the driven-side clutch plates (7) by moving the pressure member (5) against an urging force of the urging means; and
a back-torque limiting cam that is constituted by a pair of cam surfaces that reduce the press-contact force between the drive-side clutch plates (6) and the driven-side clutch plates (7) if the pressure member (5) and the clutch member (4) rotate relative to each other when a rotation speed of the output member exceeds a rotation speed of the input member,
wherein the power transmission device is capable of transmitting or cutting off rotational power that is input to the input member to the output member by pressing the drive-side clutch plates (6) and the driven-side clutch plates (7) against each other or releasing the press-contact force,
**characterized in that**
the power transmission device includes a rotation restricting portion (8a) that is capable of restricting rotation, relative to the clutch member (4), of the pressure member (5) that has moved due to activation of the activation means and is capable of maintaining a clearance between the pair of cam surfaces that constitute the back-torque limiting cam, and
**in that** the power transmission device comprises a fixing member (8) that is fixed to the clutch member (4) and to which the urging means (10) is attached, wherein the rotation restricting portion is formed in a predetermined part of the fixing member (8).

2. The power transmission device according to Claim 1, comprising a receiving member (11) that is constituted by a separate member attached to the pressure member (5), that receives an urging force of the urging means on the pressure member side, and that is capable of transmitting the urging force to the pressure member (5), wherein one of the cam surfaces of the back-torque limiting cam is formed in the receiving member (11), and the other cam surface of the back-torque limiting cam is formed in the clutch member (4).

3. The power transmission device according to Claim 1 or 2, wherein the rotation restricting portion (5e) is formed in a predetermined part of the pressure member (5), and the rotation restricting portion (5e) formed in the pressure member (5) that has moved due to activation of the activation means interferes with the clutch member (4) and restricts rotation of the pressure member (5).

4. The power transmission device according to Claim 1 or 2, wherein the rotation restricting portion (5e) is formed in a predetermined part of the clutch member (4), and the pressure member (5) that has moved due to activation of the activation means interferes with the rotation restricting portion formed in the clutch member (4) and restricts rotation of the pressure member (5).

## Patentansprüche

1. Leistungsübertragungsvorrichtung umfassend:
ein Kupplungsgehäuse (2), das sich mit der Drehung eines Antriebselements dreht, und an dem mehrere antriebsseitige Kupplungsscheiben (6) angebracht sind;
ein Kupplungselement (4), an dem mehrere abtriebsseitige Kupplungsscheiben (7), die abwechselnd mit den antriebsseitigen Kupplungsscheiben (6) des Kupplungsgehäuses (2) ausgebildet sind, angebracht sind und mit dem ein Abtriebselement gekoppelt ist;
ein Druckelement (5), das an dem Kupplungselement (4) befestigt ist und das in der Lage ist, die antriebsseitigen Kupplungsscheiben (6) und die abtriebsseitigen Kupplungsscheiben (7) gegeneinander zu drücken oder eine Druckkontaktkraft in Übereinstimmung mit seiner Bewegung relativ zu dem Kupplungselement (4) in einer axialen Richtung löst;
Druckmittel (10), das das Druckelement (5) in eine Richtung drückt, so dass die antriebsseitigen Kupplungsscheiben (6) und die abtriebsseitigen Kupplungsscheiben (7) gegeneinander gedrückt werden;
Betätigungsmittel (9), das durch eine von einem Fahrer ausgeführte Betätigung aktiviert wird und das in der Lage ist, eine Druckkontaktkraft zwischen den antriebsseitigen Kupplungsscheiben (6) und den abtriebsseitigen Kupplungsscheiben (7) durch Bewegen des Druckelements (5) gegen eine Druckkraft des Druckmittels (10) zu lösen; und
eine Nocke für die hintere Drehmomentbegrenzung, die aus einem Paar von Nockenflächen besteht, die die Druckkontaktkraft zwischen den antriebsseitigen Kupplungsscheiben (6) und den abtriebsseitigen Kupplungsscheiben (7) reduzieren, wenn sich das Druckelement (5) und das Kupplungselement (4) relativ zueinander drehen, wenn eine Drehgeschwindigkeit des Abtriebselements eine Drehgeschwindigkeit des Antriebselements übersteigt,
wobei die Leistungsübertragungsvorrichtung in der Lage ist, die dem Antriebselement eingegebene Drehkraft auf das Abtriebselement zu übertragen oder zu unterbrechen, indem sie die antriebsseitigen Kupplungsscheiben (6) und die abtriebsseitigen Kupplungsscheiben (7) gegeneinander drückt oder die Druckkontaktkraft löst,
**dadurch gekennzeichnet, dass**
die Leistungsübertragungsvorrichtung einen Drehbegrenzungsabschnitt (8a) umfasst, der in der Lage ist, die Drehung des Druckelements (5) relativ zum Kupplungselement (4) zu begrenzen das sich aufgrund der Aktivierung des Betätigungsmittels bewegt hat, und der in der Lage ist, einen Abstand zwischen dem Paar von Nockenflächen aufrechtzuerhalten, die die Nocke für die hintere Drehmomentbegrenzung bilden, und
dass die Leistungsübertragungsvorrichtung ein Befestigungselement (8) umfasst, das an dem Kupplungselement (4) befestigt ist und an dem das Druckmittel (10) angebracht ist, wobei der Drehbegrenzungsabschnitt in einem vorbestimmten Teil des Befestigungselements (8) ausgebildet ist.

2. Leistungsübertragungsvorrichtung nach Anspruch 1, umfassend ein Aufnahmeelement (11), das durch ein separates, an dem Druckelement (5) angebrachtes Element gebildet ist, das eine Druckkraft des Druckmittels (10) auf der Druckelementseite aufnimmt und das in der Lage ist, die Druckkraft auf das Druckelement (5) zu übertragen, wobei eine der Nockenflächen der Nocke für die hintere Drehmomentbegrenzung in dem Aufnahmeelement (11) ausgebildet ist und die andere Nockenfläche der Nocke für die hintere Drehmomentbegrenzung in dem Kupplungselement (4) ausgebildet ist.

3. Leistungsübertragungsvorrichtung nach Anspruch 1 oder 2, wobei der Drehbegrenzungsabschnitt (5e) in einem vorbestimmten Teil des Druckelements (5) ausgebildet ist, und der Drehbegrenzungsabschnitt (5e), der in dem Druckelement (5) ausgebildet ist, das sich aufgrund der Aktivierung des Betätigungsmittels (9) bewegt hat, das Kupplungselement (4) stört und die Drehung des Druckelements (5) begrenzt.

4. Leistungsübertragungsvorrichtung nach Anspruch 1 oder 2, wobei der Drehbegrenzungsabschnitt (5e) in einem vorbestimmten Teil des Kupplungselements (4) ausgebildet ist, und das Druckelement (5), das sich aufgrund der Aktivierung des Betätigungsmittels (9) bewegt hat, den in dem Kupplungselement (4) ausgebildeten Drehbegrenzungsabschnitt stört und die Drehung des Druckelements (5) begrenzt.

## Revendications

1. Dispositif de transmission de puissance comprenant :
un carter d'embrayage (2) qui tourne avec la rotation d'un élément d'entrée et auquel une pluralité de plaques d'embrayages côté entraînement (6) sont fixées ; un élément d'embrayage (4) auquel une pluralité de disques d'embrayage côté entraînement (7) qui sont formés en alternance avec les disques d'embrayages côté entraînement (6) du carter d'embrayage (2) sont fixés et auquel un élément de sortie est couplé ;
un élément de pression (5) qui est fixé à l'élément d'embrayage (4) et qui est capable de presser les disques d'embrayage côté entraînement (6) et les disques d'embrayage côté entraîné (7) l'un contre l'autre ou de relâcher une force de contact par pression conformément à leur mouvement par rapport à l'élément d'embrayage (4) dans une direction axiale ; des moyens de poussée (10) qui poussent l'élément de pression (5) dans une direction telle que les disques d'embrayage côté entraînement (6) et les disques d'embrayage côté entraîné (7) sont pressés l'un contre l'autre ;
un moyen d'activation (9) qui est activé par une opération effectuée par un conducteur et qui est capable de relâcher une force de contact par pression entre les plaques d'embrayages côté entraînement (6) et les plaques d'embrayages côté entraîné (7) en déplaçant l'élément de pression (5) contre une force de poussée des moyens de poussée (10); et
une came de limitation de contre-couple qui est constituée d'une paire de surfaces de came qui réduisent la force de contact par pression entre les plaques d'embrayage côté entraînement (6) et les plaques d'embrayage côté entraîné (7) si l'élément de pression (5) et l'élément d'embrayage (4) tournent l'un par rapport à l'autre lorsqu'une vitesse de rotation de l'élément de sortie dépasse une vitesse de rotation de l'élément d'entrée,
dans lequel le dispositif de transmission de puissance est capable de transmettre ou de couper la puissance de rotation qui est appliquée à l'élément d'entrée vers l'élément de sortie en pressant les disques d'embrayage côté entraînement (6) et les disques d'embrayages côté entraîné (7) l'un contre l'autre ou en relâchant la force de contact par pression,
**caractérisé en ce que**
le dispositif de transmission de puissance comprend une partie de restriction de rotation (8a) qui est capable de restreindre la rotation, par rapport à l'élément d'embrayage (4), de l'élément de pression (5) qui s'est déplacé en raison de l'activation des moyens d'activation et est capable de maintenir un jeu entre la paire de surfaces de came qui constituent la came de limitation de contre-couple, et
**en ce que** le dispositif de transmission de puissance comprend un organe de fixation (8) qui est fixé à l'organe d'embrayage (4) et auquel les moyens de poussée (10) sont fixés, dans lequel la partie de restriction de rotation est formée dans une partie prédéterminée de l'élément de fixation (8).

2. Dispositif de transmission de puissance selon la revendication 1, comprenant un élément de réception (11) qui est constitué par un élément séparé fixé à l'élément de pression (5), qui reçoit une force de poussée des moyens (10) de poussée du côté de l'élément de pression, et qui est capable de transmettre la force de poussée à l'élément de pression (5), dans lequel l'une des surfaces de came de la came de limitation de contre-couple est formée dans l'élément de réception (11) et l'autre surface de came de la came de limitation de contre-couple est formée dans l'élément d'embrayage (4).

3. Dispositif de transmission de puissance selon la revendication 1 ou 2, dans lequel la partie de limitation de rotation (5e) est formée dans une partie prédéterminée de l'élément de pression (5), et la partie de limitation de rotation (5e) formée dans l'élément de pression (5) qui s'est déplacé en raison de l'activation des moyens d'activation (9) interfère avec l'élément d'embrayage (4) et limite la rotation de l'élément de pression (5).

4. Dispositif de transmission de puissance selon la revendication 1 ou 2, dans lequel la partie de limitation de rotation (5e) est formée dans une partie prédéterminée de l'élément d'embrayage (4), et l'élément de pression (5) qui s'est déplacé en raison de l'activation des moyens d'activation (9) interfère avec la partie de limitation de rotation formée dans l'élément d'embrayage (4) et limite la rotation de l'élément de pression (5).
